# EUROPEAN PATENT APPLICATION

(11) **EP 1 684 249 A2**
(43) Date of publication of application: **26.07.2006**
(21) Application number: 05425818.1
(22) Date of filing: 18.11.2005
(51) Int. Cl.: G08G 1/00, G07C 5/00

(54) **Radio system to optic confirmation for survey transmission and events recording of incorrect guide provided of longitudinal control of speed and distance and automatic device of deceleration and braked for road vehicle**

(30) Priority: 22.11.2004 IT SA20040015
(71) Applicant: De Vita, Rodolfo, 84083 Castel San Giorgio SA (IT)
(72) Inventor: De Vita, Rodolfo, 84083 Castel San Giorgio SA (IT)

(57) **Abstract**

System which permits to send and radio orders optical confirmation among cars provided with the same signal transmitting unit to be used for incorrect driving warnings or for sanctionatory activities.

The system, which also motorizes the engine and the brakes of the car, is essentially constituted by three units: an entry unit generating an encoded signal to be transmitted and visible on a display; a transmitting and receiving unit which has to transmit and receive the encoded radio signal; a leading unit which manages the relies working and generates an order when the reception , with anti-collision check, has occurred and can be re-send to the entry unit.

The system can generate signals randomly encoded in the same frequency, so that it would be absolutely improbable that to more cars produce and receive the same signal at same time; the signals are received and analyzed by receiving-transmitting antennas and the reproduced through a transponder placed in the back of the car having an adequate screen set so that to catch only the radio waves coming from the following car. The optical radio system can also include an independent device that surveys the security distance through the collimate ray emission and is combined with a video camera filming the incorrect driving behaviour of the following car, its number plate and even the driver's image to be automatically transmitted to the police. Differently from the other radar based system, this system proves itself to be cheap and reliable in every environmental, weather and road conditions.

## Description

The object of this invention is a radio system which works together with an optical recording device in order to another preceding vehicle and its distance from itself.

This system compares the second vehicle speed with its own and starts working when the security distance between the two vehicles has been exceeded, then it warns the driver about the danger, if the situation keeps dangerous over a certain time limit, for example 5 sec., it transfers the information about the infraction to an external receiving station records the dangerous happening and operates on the engine in order to decelerate and on the brakes if the impact seems to be imminent.

As it is well-know, since many years the European Governments have an important aim to halve the number of car-accidents deads by promoting new technologies to be employed in the road security.

Being the traffic increased, it is very important for security to improve the vehicles speed monitoring.

At this purpose, the best solutions are to be found in those new technologies which allow to determine the right speed in every moment as, for example: according to traffic situation, to the characteristic of roads and to the external conditions such as weather.

These new technologies warn the driver through external traffic signals or through board communication systems. The technological developments indeed will allow us to strengthen the already known check and sanctions methods thanks to the diffusion of automathical instruments and board gears that help the driver.

Therefore, this applicant has already introduced an Italian patent SA 2004A000004.

The future gears installation of devices in vehicles which record the parameters required to understand and prevent the reasons of accidents will make drivers more responsible, will accelerate the legal processes about the accidents, will help to cut down the costs and allow to introduce more efficacious precautionary measures.

In this context, dangerous driving can be considered as a crime.

In failing his patent, the applicant is now proposing an optical radio system which completes the previous one and can be used on highways, on clearway, on state roads and city streets.

This system points out the presence and speed of another preceding car and warns if the distance from this one is smaller than the distance provided for highway code. Besides that, as this distance is getting dangerous and is passing the braking security limit of own car, if the crash, according to the calculation, seems not to be avoided, the proposed system operates automatically on the engine and on the brakes to slacken the car until it definitively stops by means of a strong braking.

A system called ACC (Sensor Control Unit) provided with a radar sensor and a control centreline, has already been put on the market. The radar sensor points out the preceding cars until a 150 m distance.

The centreline calculates their speed and distances from following car.

Therefore, the Electronic Stability Program Sensors give information about the driving direction in order to identify the vehicles to be received by ACC.

This one adapts the car speed to the other vehicles speed by operating on the engine and the brakes.

When the lane is clear, the car accelerates until it reaches the speed previously chosen by the driver.

The ACC system uses a radar technology completely based on the Monolithic Microwave Integrated Circuit which allows to point out the other.

The nucleus of the radar system is made of an high frequency (77Ghz) called Transmitting Receiving Modulo which incorporates those MMIC microprocessors firstly developed to be used for telecommunication and defence.

The radar system guarantees an excellent performance but as its cost is really high, its future uses have to be applied only high displacement cars. Moreover, the employment of radar bend for such an extensive use as cars management causes serious questions about environment compatibility and human health.

The use of infrared sensors, even if cheaper and easy to be managed, does not assure a regular functioning in all the situations which can be verified on the road.

The infrared sensors, indeed, work properly when the optical route is clear: it means that when the weather is foggy or rainy and when the street rubbles lie down the back of the car, an infrared speed-check gear will not be reliable.

The applicant is proposing a radio system which can be combined to an impulsive and directive bright source and relative telemetric end instrument using free frequencies as for example: a 433,92 MHz favourite radio frequency which can be settled down the car and is able to give anti-collision warnings whenever the distance from a preceding car, positioned on the same carriageway, goes down the security limit.

In this way, we will be able to regulate manually our own speed and, consequently, to keep the security distance even when the visibility is low. This system guarantees an automathical functioning including a slackening a sudden braking work in such critical situations as, for example, a driver's distraction or collapse.

The system can be easily put on the front side of the car while, in case of different location, while calibrating the system, we must pay attention to the emitter and the receiver position which is very important for the exact calculation of the security distance.

The radar detection corner is included between 5 and 15 grades, it should be 8 grades more or less than the axis starting from the antenna which intercepts the closest cars in order to guarantee an optical reading confirming the security distance.

These values allow the driver to point out a preceding car by eliminating those cars who makes unexpected line change or where his own car is overtaking or radio signals which an the same or interfere between them coming from other preceding cars keeping the security distance.

The system can be applied to all speeds.

The patent described allows the cars provided with a special radio system to send and receive informations to each others.

The radio system above has to be combined with an independent optical reading system which :
Surveys the presence and the distance of a preceding car;
Compares the value obtained with the first car's speed;
Calculates the security distance and starts working wherever it has been exceeded, by warning the driver about the danger;
Transfers the information about the infraction to an external receiving station if the situation keeps dangerous beyond a certain time limit as, for example, 5 seconds;
Records the dangerous happening and operates on the engine to slow down the car or stop it if the impact seems to be imminent.

This system is basically continued by:
A first unit including a gear providing for the radio signal generation, transmission and following reception.

The radio signal is then encoded, after being caught and transmitted by the apparatus placed in the pressing car.

Moreover, the apparatus is provided with a reader whose task is to identify a bright source on the preceding car; the apparatus, started up by the same radio signal, calculates the time passing between the radio signal generation and the bright source activation. Hence the distance calculation processed by a telemetric gear working independently from the radio apparatus above.

As the telemetric gear works even in case of radio apparatus lack or failure, it can calculate the distance between the two cars through a collimate ray emission.

The whole process can be checked in real time on the display.

A second detective unit receives transmits and activates a transponder created to the encoded radio signal directive retransmission.

A third leading unit manages the relè driving and informs the input drive when the reception (with anti-collision check) takes place.

The RF communication system is made of an electronic equipment which is connected with the generation system of (generating) the RF field. This equipment reduces the "noise" and incodes/decodes the modulation of the electromagnetic carrier so that to interpret the signals. The generation system of the RF field is made of an electronic equipment, needed for the emission/stabilization of the signal, and of an antenna. The transmission gear will have a communication file containing a list of "control fields" (it verifies if the string is right or not) related to the transmission phases; this system will eventually allow to check transmission or reception mistakes. The transmission system of the RF signals takes place thanks to the main signal modulation (chosen frequency), the transponder uses the backscatter radiation to obtain the communication. The reader behaves like a radar system by reading the bits coming from the transponder antenna making a radio bit. The antennas used for the radio field can be directional(as for a radar) and their kinds essentially depend on the frequency we want/decide to use. In order to optimize the reception and transmission field, the antenna should have different shapes and dimensions according to the weather conditions. The wavelength is also important since electric fields as powerful as to create a relation between two sources can be provoked only over the 30 MHz. The radio emission of encoded impulses can be previously determined by the encoding board or the apparatus can produce signals randomly encoded in the same frequency, so that it would be absolutely improbable that two or more cars produce and receive the same signal at the same time. The emission of radio signals encoded at random is continually generated wherever the signal is kept until it has been received in order to measure the distance. After that, if the event does not keep the same features it has to be changed. The transponder is placed in the back of the car which has to be provided with an adequate screenset so that to reproduce only the radio waves coming from the following car. If the radio signal produced by the car comes from more than one of the preceding cars the receiving gear will catch only the signal coming from the smallest distance that is also the most dangerous one.

Moreover, a telemetric gear placed in the front of the following car and catching the bright signal coming from the back of the preceding car, will allow to:

Keep watching the preceding car and identify it;
make a second measurement of the security distance between two cars;
warn the driver when it moves transversally such as, for example, when it suddenly changes its carriageway;
point out when our own car is overtaking, excluding in several situations those radio signals not in axis with the control confirmation optical telemetric gear.

The whole process is supported by a device using the collimate ray emission instead of the radio signals for distance measurement. By calculating the distance among cars/between two cars, thanks to a simple automathic calculation, the gear will limit the speed and will therefore re-establish the security distance between the two cars. The system capabilty changes according to extreme conditions and to environmental disturbances; in normal conditions the signals transmission range reaches the 200 m. limit being useless to go further; the system filterings will limit the interference. Anyway, the receiver sensibility can be included in the standard parameters while the transmission power is the strongest that the current law admits. The control unit provided with pust-button panel is placed on the switch-board; the transmitting unit (antenna) is usually placed on the top of the front bonnet while the receiving-retransmitting unit is placed on the back of the car.
The signal gives an on/off order by an univocal telegram encoded on the frequency and firstly radio-transmitted to the preceding car receiver, and to the back secondly. As soon as the signal is caught, the security distance is calculated and, if necessary, a relè contact is automathically started up. The receiver checks the wholeness and the correctness of the received informations coming from each telegram. A small display with system calibration keys, acustic danger or infraction warning signals and brights leds is placed in the car. The hand-calibration of the system works thanks to an easy video menu which leads the user through the different working instructions, including the automathical setting-up functions for the car starting, needed in the first phases, and the supplement options for the navigation system.

This patent can also be employed as an educational system aiming to the learning of a correct car driving tecnique in order to improve the road security and road regular traffic conditions.

The witness available in the car represents an important deterrent to dangerous driving behaviours since during the routine checks it can be helpful for sanctioning or exculpating the driver in his dissent/contention to highway code violation or for understanding the dynamics of the car accident.

Upon an extractable and copy able deck, univocally associable with the car numberplate, the system generates a digital file containing informations that can be kept by police as a proof of the infractions and of those events which particularly exemplify the driver's behaviour. The record will contain: alphanumerical data ordered by year, month and day; time indication by hours, minutes, seconds; the identification code; a gear counting both the distance from the preceding car and the speed used by the two drivers; the car numberplate.

If the security distance from a preceding car is not being respected, the system warns the driver about the infraction. Moreover, if the driver keeps infringing the code, even over a certain time, the system will record the event or will send to an external receiver a special signal including informations such as: car numberplate, date, hour and speed. It will also indicate how much the driver has exceeded the security distance and how long he has been keeping in infraction/he has been infringing the code. If the driver, within a certain time, as for example 5 seconds, re-establish the security distance, the event will not be recorded by the board system.

On the contrary, if the driver keeps infringing, the data about speed, distance and infraction time will be recorded or transmitted to a local or central control unit.

This system, easy to be explained, is really useful since the greater part of car accidents, expecially on the clearway, is dued to disregard of the security distance. The drivers of those cars provided with this invention will be aware that if they do not respect the security distance, their infraction will be recorded in board memory. Moreover, the drivers know that the system will automathically inform the authorized patrols about the infraction so that they can proceed to elaborate the corresponding sanction. Thanks to this solution, the careless driver will notice his dangerous driving and the undisciplined one will realize that he cannot keep behaving incorrectly otherwise will be denounced in real time. This system will also represent a direct and valid help by slowing down the car or braking it in case of imminent crash.

The invention described in the lines above can be considered as a decisive step towards the future being it based on the simple and possible transmission of data regarding the dangerous driving.

For a certain and immediate identification of the driver, it should also be considered the possibility to insert the use of a personal card (such as tax number or bancomat) or to add a special keyboard where to compose a personal code. Only after this process, the car will start up. Apart from the transpoder as described, it will be useful to place in the back of the car an indipendent gear catching the distance through a collimate ray emission, so that to underline incorrect driving behaviours even by those drivers whose cars do not have a radio apparatus. It must be noticed that besides signalling the danger, by simply adding a videocamera, it will be possible to film the incorrect driving of the following car, its numberplate and even the driver's video to be transmitted to the police.

As from the description above, we can argue that: differently from other radar based systems, our invention remains faithful to its aims and boasts a cheap and functional system which proves reliable in all weather and road conditions.

## Claims

1. Survey, transmission and record optical radio system for incorrect driving examples provided with speed and distance longitudinal check and automathical decelerating braking device for vehicles which permits to send and receive radio orders among cars having a unit transmitting and receiving the signal to be used in order to monitorize the engine and brakes; the same system is made of a first unit including a device placed on the front of the car whose task is to generate, transmit and receive an encoded radio signal; of a telemetric gear surveying a bright source and of a small display for the user; moreover, there is a second unit for receiving and transmitting task placed in the back of the car, that activates a transponder for directive re-transmission of the encoded radio signals and for the activation and modulation of the directive bright pulsating source; finally, a third leading unit, placed in the engine area, manages the start up of the relies and generates an order, with anti-collision check, when the reception takes place to be send to the entry unit.

2. Survey, transmission and record optical radio system for incorrect driving examples provided with speed and distance longitudinal check and automathical decelerating braking device for vehicles, as described in the claim 1) **characterized by** a telemetric gear placed on the front of the following car which surveys the impulsive bright signal provoked by the same radio signal appearing on the back of the preceding car; this telemetric gear permits to obtain a second measurement of the security distance among cars and to signal when the preceding car moves transversally as, foe example, when it suddenly changes its carriageway or when our own car overtakes or in many other situations, except when the radio signals are not in axis with control and confirmation telemetric optical gear.

3. Survey, transmission and record optical radio system for incorrect driving examples provided with speed and distance longitudinal check and automathical decelerating braking device for vehicles, as described in the claim 1) **characterized by** a random and unbroken radio emission of encoded impulses, included in the same frequency, when lasts until the closest car has been reached and it is more or less 8 grades than the axis.

4. Survey, transmission and record optical radio system for incorrect driving examples provided with speed and distance longitudinal check and automathical decelerating braking device for vehicles, as described in the claims 1), 2) and 3) **characterized by** the RF signal transmission system which is activated through the main signal modulation (the chosen frequency) and by a wavelength over taking the 30 MHz, a favourite frequency could be 433,92 MHz.

5. Survey, transmission and record optical radio system for incorrect driving examples provided with speed and distance longitudinal check and automathical decelerating braking device for vehicles, as described in the claims 1) and 3) constituted by a device which makes a signal warning the driver when the distance between two cars is smaller than the security distance allowed by law; this signal lasts and accentuates its tones and volume as long as the danger increases.

6. Survey, transmission and record optical radio system for incorrect driving examples provided with speed and distance longitudinal check and automathical decelerating braking device for vehicles, as described in the claims 1) and 3) whose main characteristic is that: wherever the vehicle does not in the driving parameters established by law, within a specific time, as for example 5 seconds, the incorrect driving event will be automathically recorded; moreover, if the board equipment confirms the infraction twice, the system will transmit by sms or by radio (through specifical frequencies) to a central or to institutions to check the road security, the car number plate, the date, hour, speed, how much the security distance has been exceeded of and how long the driver has been infringing the highway code.

7. Survey, transmission and record optical radio system for incorrect driving examples provided with speed and distance longitudinal check and automathical decelerating braking device for vehicles, as described in the preceding claims, where the radio device generating the transmitting signal is usually placed in the front of the car and the gear which receive and transmits is placed in the back; it could be also placed in a different way but, in this case, it should be considered the actual position of the emitter and of the radio signal receiver for a right survey of the security distance.

8. Survey, transmission and record optical radio system for incorrect driving examples provided with speed and distance longitudinal check and automathical decelerating braking device for vehicles, as described in the preceding claims including an extractable recording device which records the incorrect driving example and allows to identify the car's number plate; finally, the registration can be used as a proof of those infractions and events which particularly exemplify the driver's behaviour.

9. Survey, transmission and record optical radio system for incorrect driving examples provided with speed and distance longitudinal check and automathical decelerating braking device for vehicles, as described in the preceding claims that can be improved thanks to the possibility to insert: the use of a personal card, such as tax number or banc mat, in order to guarantee a certain and immediate identification of the driver to be transmitted via radio; a simple keyboard where to compose the driver's personal code in only this case after this process the car will start up.

10. Survey, transmission and record optical radio system for incorrect driving examples provided with speed and distance longitudinal check and automathical decelerating braking device for vehicles including, at last, an independent device which surveys the security distance through a collimate ray emission and is combined with a video camera filming the incorrect behaviour by the driver of the following car, its number plate and even the driver's image to be automathically transmitted to the police.
